# FASCICULE DE BREVET EUROPEEN

(11) **EP 2 481 052 B1**
(45) Date de publication et mention de la délivrance du brevet: **12.08.2015**
(21) Numéro de dépôt: 10754756.4
(22) Date de dépôt: 20.09.2010
(51) Int. Cl.: G21C 7/00, G21C 17/00, G21D 3/00, G21C 17/108

(54) **Procédé d'aide à l'exploitation d'un réacteur nucléaire**
Verfahren zur Unterstützung des Betriebs eines Kernreaktors
Method for assisting the operation of a nuclear reactor

(30) Priorité: 22.09.2009 FR 0956498
(43) Date de publication de la demande: 01.08.2012
(73) Titulaire: Areva NP, 92400 Courbevoie (FR)
(72) Inventeur: L'ABBATE, Annalisa, 75012 Paris (FR); LEFEBVRE DE RIEUX, Anastasie, 75018 Paris (FR); MOURLEVAT, Jean-Lucien, 78590 Noisy-le-Roi (FR)
(74) Mandataire: Lebkiri, Alexandre
(86) Numéro de dépôt international: PCT/EP2010/063810
(87) Numéro de publication internationale: WO 2011/036120

(56) Documents cités:
- WO-A2-2009/071817
- FR-A1- 2 796 196
- US-A- 5 024 801
- US-A1- 2005 089 831
- US-B1- 6 493 412
- BOYD W A ET AL: "Beacon-colss core monitoring system application and benefits" INTERNATIONAL CONGRESS ON ADVANCES IN NUCLEAR POWER PLANTS 2005: ICAPP 05 ; MAY 15 - 19, 2005, SEOUL, KOREA, vol. 2, 15 mai 2005 (2005-05-15), pages 1019-1029, XP009133040

## Description

La présente invention concerne un procédé d'aide à l'exploitation d'un réacteur nucléaire couplé avec un système de suivi de fonctionnement du coeur, et plus particulièrement avec un système de surveillance du coeur en continu.

L'invention est plus particulièrement adaptée aux réacteurs nucléaires à eau pressurisée.

En fonctionnement normal, le coeur d'un réacteur nucléaire doit respecter certaines conditions qui garantissent le respect des critères de sûreté en cas d'accident. Ces conditions (dites de catégorie 1) correspondent aux situations initiales prises dans les études de sûreté ; les dépasser en fonctionnement normal remet donc en cause la démonstration de sûreté.

Ainsi, il est nécessaire de déterminer si la production et la répartition volumique du flux de neutrons ainsi que la répartition volumique de la puissance dégagée dans le coeur sont conformes aux conditions correspondant à un fonctionnement normal. La vérification en continu du respect des limites de fonctionnement normal définit la fonction de « surveillance des conditions pré-accidentelles du coeur ».

Pour cela, on est amené à calculer des paramètres de fonctionnement du coeur du réacteur nucléaire, tels que la répartition volumique de la puissance volumique dans le coeur, les facteurs représentatifs de la forme du flux neutronique (déséquilibre axial ΔI, facteur d'élévation d'enthalpie FΔH, etc.) ou encore le Rapport de Flux Thermique Critique (RFTC) (associé au phénomène d'ébullition critique) ou la puissance linéique (associée au phénomène de fusion du combustible). Ces paramètres sont déterminés à partir de mesures représentatives du flux neutronique ou de la puissance dégagée dans le coeur permettant de déterminer la répartition du flux neutronique dans l'ensemble du coeur, en trois dimensions.

On connaît différents dispositifs de surveillance en continu du fonctionnement normal du coeur déterminant une distribution volumique de puissance dans le coeur.

Un premier système de surveillance en continu du coeur est décrit dans le brevet FR2796196. Ce dernier décrit un système de surveillance en continu des limites du fonctionnement normal du réacteur comportant une instrumentation à l'intérieur de la cuve réacteur formée par des détecteurs de flux neutronique comportant des sondes de mesure collectrons intégrant de préférence un émetteur à base de rhodium.

Un tel système de surveillance comporte un calculateur de surveillance dans lequel un code de calcul du flux neutronique permet d'obtenir la répartition instantanée du flux neutronique ou de puissance dans le coeur en prenant en compte des mesures fournies par les détecteurs de flux neutroniques disposés à l'intérieur du coeur.

Cette répartition de flux ou de puissance permet ensuite de déterminer des paramètres de fonctionnement du coeur tels que :
- la puissance linéique (Plin), c'est-à-dire la puissance par unité de longueur des éléments combustibles du coeur du réacteur,
- le rapport d'échauffement critique (REC) traduisant l'écart de l'échauffement des éléments combustibles par rapport à un échauffement critique,
- le déséquilibre axial de puissance du coeur (Dpax),
- le déséquilibre azimutal de puissance du coeur (Dpaz),
- la marge d'antiréactivité (MAR).

Un deuxième système de surveillance du coeur en continu est décrit dans la demande de brevet FR2914103. Le système décrit est un système de surveillance en continu utilisant un ensemble de détecteurs de mesure de flux neutronique disposés à l'extérieur de la cuve du réacteur et un ensemble de sondes de mesure de la température du caloporteur en sortie des assemblages combustible. Ce système de surveillance comporte également un calculateur de surveillance dans lequel un code de calcul du flux neutronique permet d'obtenir la répartition instantanée du flux neutronique ou de puissance dans le coeur en prenant en compte des mesures fournies par les sondes de mesure du flux neutroniques excore et par les thermocouples.

Enfin, le document US5024801 décrit un système d'aide à l'exploitation d'un réacteur nucléaire comportant un système mettant régulièrement à jour le modèle du coeur du réacteur.

J Afin d'obtenir une représentation plus exacte de la distribution de flux neutronique dans la coeur, on effectue de manière complémentaire, à intervalles de temps réguliers mais relativement longs, par exemple de l'ordre d'un mois, des mesures de flux neutronique à l'intérieur du coeur, en utilisant par exemple des sondes de mesure mobiles de petites dimensions, appelées sondes incore, qui sont généralement constituées par des chambres à fission. Les sondes incore sont chacune fixées à l'extrémité d'un câble souple, appelé câble téléflex, assurant son déplacement à l'intérieur d'une voie de mesure de l'instrumentation du coeur. Ainsi, les sondes incore fournissent périodiquement, au moyen d'un calculateur formant le calculateur du système d'instrumentation interne du coeur, désigné par l'abréviation RIC (Reactor Incore ou Réacteur Instrumentation Coeur), une image précise de la distribution volumique de puissance dans le coeur appelée carte du flux.

La carte de flux sert de base à la détermination de coefficients d'ajustement des mesures effectuées en continu par les procédés de surveillance pour qu'elles soient représentatives de la distribution de la puissance dans le coeur.

Comme décrit dans le brevet FR2796196, en dehors des périodes où le calculateur du système RIC est utilisé pour l'établissement de cartes de flux neutronique, le code neutronique implanté dans le calculateur du système RIC est susceptible d'être utilisé pour effectuer des calculs prédictifs sur l'évolution des paramètres fonctionnels du coeur du réacteur nucléaire et pour effectuer des simulations afin d'apporter une aide au pilotage, c'est-à-dire afin de définir les différentes actions possibles à entreprendre sur les variables de pilotage dans une situation donnée.

En effet, il peut s'avérer utile de pouvoir prédire l'évolution de la distribution de flux neutronique dans le coeur et donc des marges de fonctionnement, par exemple du type RFTC, afin d'anticiper les actions de conduite qui permettront d'optimiser la manoeuvrabilité de la tranche nucléaire.

Cependant, l'utilisation du calculateur du système RIC pour des opérations de simulation n'est possible qu'en dehors des périodes d'acquisition et de traitement des mesures, destinées à permettre la réalisation d'une carte de flux.

De plus, la réalisation d'une carte de flux peut être également requise suite à l'émergence de différents phénomènes : par exemple en cas d'alarme de déséquilibre azimutal de puissance générée par le système de surveillance ou en cas de fonctionnement dégradé de ce système.

Ainsi, un opérateur peut se retrouver dans l'incapacité d'effectuer une simulation de pilotage si le calculateur du système RIC est indisponible.

En outre, une telle utilisation du calculateur du système RIC implique de donner à l'opérateur la possibilité d'intervenir sur le calculateur du système RIC, cette intervention étant susceptible d'affecter le bon fonctionnement de ce système.

Enfin, l'utilisation du calculateur du système RIC peut impliquer qu'on réalise un recadrage de la répartition de flux neutronique en tenant compte de mesures représentatives du flux neutronique à l'intérieur du coeur. La mise en oeuvre d'un tel recadrage donne accès à une distribution de puissance plus précise, mais ajoute néanmoins la contrainte de disposer d'un jeu de mesures adapté à cette fonctionnalité.

On notera que les configurations décrites ci-dessus concernent uniquement des systèmes de surveillance en continu munis d'un code de calcul neutronique. Cependant, il convient également de pouvoir prédire l'évolution de la distribution de flux neutronique dans le coeur des réacteurs ayant des systèmes de suivi n'assumant pas un rôle dans la surveillance des conditions pré-accidentelles. Par exemple, il existe des réacteurs munis d'un système de suivi, fournissant des informations à l'opérateur à titre informatif, ledit système de suivi coexistant avec un système de surveillance, uniquement fondé sur l'exploitation directe d'une mesure. L'analogie entre système de surveillance et système de suivi n'est donc pas systématique.

Dans ce contexte, l'invention a pour but de pallier les problèmes mentionnés ci-dessus et vise à fournir un procédé d'aide à l'exploitation d'un réacteur nucléaire permettant à un opérateur d'effectuer des calculs prédictifs ou une simulation de pilotage du réacteur nucléaire à tout instant quelle que soit la disponibilité du calculateur du système RIC et ne nécessitant pas de recadrage de la répartition du flux neutronique fournie par le calculateur du système RIC. Pour ce faire, le procédé selon l'invention utilise un système en amont doté d'un code de calcul neutronique reproduisant de manière continue les caractéristiques neutroniques du coeur, quelles que soient les fonctionnalités du système en amont, qui peut avoir uniquement un rôle informatif, et quelle que soit l'instrumentation qu'il utilise. Le procédé selon l'invention s'applique donc à tout système de surveillance en continu des limites de fonctionnement normal muni d'un code de calcul neutronique, et ce quel que soit le type d'instrumentation utilisée pour la mesure de distribution de puissance dans le coeur par ledit système de surveillance, et plus généralement à tout système de suivi de fonctionnement du coeur doté d'un code de calcul neutronique reproduisant de manière continue les caractéristiques neutroniques du coeur. En d'autres termes, l'invention s'applique également à des réacteurs utilisant des systèmes de surveillance basés exclusivement sur des mesures (i.e. non munis d'un code de calcul neutronique) dès lors que l'on dispose d'un système de suivi de fonctionnement du coeur doté d'un code de calcul neutronique reproduisant de manière continue les caractéristiques neutroniques du coeur.

A cette fin, l'invention propose, selon la revendication 1, un procédé d'aide à l'exploitation d'un réacteur nucléaire comportant les étapes consistant à :
- établir une requête d'aide à l'exploitation dudit réacteur au moyen d'une interface homme/machine interagissant avec un calculateur d'aide à l'exploitation dédié à ladite aide à l'exploitation et utilisant un code de calcul neutronique en trois dimensions résolvant l'équation de la diffusion, dit code d'aide à l'exploitation;
- transmettre à partir d'un système de suivi du fonctionnement du coeur du réacteur vers ledit calculateur d'aide à l'exploitation et de façon unidirectionnelle, un ensemble de données représentatives des caractéristiques matérielles, géométriques et neutroniques du coeur, ainsi que des conditions de fonctionnement du coeur, lesdites données étant déterminées par un code neutronique en trois dimensions actualisant le bilan isotopique du coeur au cours de l'épuisement du combustible et résolvant périodiquement en ligne l'équation de la diffusion, dit code de suivi, ledit code de suivi étant intégré dans un deuxième calculateur distinct, dit calculateur de suivi, dédié au dit système de suivi ;
- déterminer une évolution du comportement du coeur du réacteur en utilisant ledit code d'aide à l'exploitation, lesdites données représentatives des caractéristiques matérielles, géométriques et neutroniques du coeur, ainsi que des conditions de fonctionnement du coeur et ladite requête d'aide à l'exploitation étant utilisées en tant que données d'entrée dudit code d'aide à l'exploitation.

On entend par le terme périodiquement en ligne, une périodicité pouvant aller de quelques secondes (résolution de l'équation de la diffusion en continu) à plusieurs heures. Avantageusement, le code de calcul neutronique du procédé de suivi de fonctionnement résout l'équation de la diffusion en continu, c'est-à-dire avec une périodicité de l'ordre d'une minute, ou inférieure à une minute, typiquement de l'ordre de 30 secondes. Grâce à l'invention, il est possible de fournir à un opérateur un outil d'aide à l'exploitation du réacteur, permettant par exemple de prédire ou de simuler le comportement du réacteur en bénéficiant des données représentatives des caractéristiques matérielles, géométriques et neutroniques du coeur, ainsi que des conditions réelles de fonctionnement du coeur, ces données et conditions étant rassemblées dans le modèle du coeur et calculées notamment par un système de suivi de fonctionnement, permettant ainsi de faciliter la conduite et l'exploitation du réacteur.

Le procédé selon l'invention ne nécessite pas l'utilisation des données ajustées au moyen de mesures de l'instrumentation, ni d'un recadrage de ces données. Le procédé d'aide à l'exploitation selon l'invention est ainsi utilisable avec un système de suivi en amont dont la seule condition est qu'il soit doté d'un code de calcul neutronique.

Le couplage entre le système de suivi de fonctionnement et le procédé d'aide à l'exploitation peut être réalisé de façon à garantir une absence totale d'impact sur le fonctionnement du système de suivi de fonctionnement, notamment lorsque le système de suivi est un système de surveillance des conditions pré-accidentelles. L'interaction est alors réalisée par une transmission unidirectionnelle des données représentatives des caractéristiques matérielles, géométriques et neutroniques du coeur, ainsi que des conditions de fonctionnement du coeur, ou modèle du coeur (on utilisera par la suite la terminologie « modèle 3D du coeur » pour désigner cet ensemble de données dans le cas d'un code neutronique à trois dimensions), déterminées par le code de suivi du système de suivi vers le calculateur d'aide à l'exploitation comportant également un code de calcul neutronique.

Ainsi, une demande d'aide à l'exploitation, ou tout autre demande de l'opérateur, comme une simulation de pilotage, peut être réalisée par le procédé d'aide à l'exploitation au moyen du code d'aide à l'exploitation de façon indépendante, sans perturbation du fonctionnement du code de suivi et sans transmission possible de données vers le système de suivi, les deux codes de calcul étant dans deux calculateurs distincts (i.e. fonctionnant indépendamment l'un de l'autre). Le transit d'informations ne peut se faire que du système de suivi vers le calculateur d'aide à l'exploitation ; en revanche, le calculateur d'aide à l'exploitation ne communique aucune information au système de suivi afin qu'une erreur d'utilisation par l'opérateur ou une erreur informatique ne se répercutent pas sur le système de suivi du coeur.

Contrairement à la solution proposée dans le brevet FR2796196, le procédé selon l'invention utilise un code neutronique d'aide à l'exploitation disponible à tout instant permettant d'effectuer par exemple des simulations ou des calculs prédictifs à partir des conditions de fonctionnement du coeur à jour et sans risque de perturbation du calculateur de suivi de fonctionnement ou de surveillance utiles à l'exploitation du réacteur en s'affranchissant d'un recadrage de la distribution du flux neutronique à l'aide de mesures.

Avantageusement, le système de suivi du fonctionnement du coeur en continu est par exemple un système de surveillance du fonctionnement du coeur en continu tel que décrit dans les brevets FR2796196 et FR2914103.

Toutefois, comme déjà mentionné plus haut, la portée de la présente invention ne se limite pas à l'utilisation d'un système de surveillance. L'invention est également applicable avec tout système de suivi installé en amont du système d'aide à l'exploitation comportant un code de calcul neutronique reproduisant de manière continue les caractéristiques neutroniques du coeur, quelles que soient les fonctionnalités du système en amont, qui peut avoir uniquement un rôle informatif, et quelle que soit l'instrumentation qu'il utilise.

Ainsi, le procédé d'aide à l'exploitation selon l'invention est applicable aussi bien à un réacteur nucléaire comportant un système de surveillance doté d'un code de calcul neutronique qu'à un réacteur nucléaire comportant un système de surveillance n'utilisant pas de code de calcul neutronique dès lors que le réacteur comporte un système de suivi du coeur en ligne (par exemple informatif) doté d'un code de calcul neutronique.

Avantageusement, le code neutronique du système de suivi en amont de la présente invention est un code de calcul neutronique en trois dimensions résolvant instantanément, et de façon périodique, l'équation de la diffusion et actualisant le bilan isotopique du coeur au cours de l'épuisement du combustible. Ainsi, le procédé selon l'invention utilise avantageusement des données d'entrée formées par un modèle 3D représentant au plus près les conditions de fonctionnement du coeur.

Le procédé selon l'invention peut également présenter une ou plusieurs des caractéristiques ci-dessous, considérées individuellement ou selon toutes les combinaisons techniquement possibles :
- ledit code de suivi fonctionne de façon continue, typiquement avec une périodicité de l'ordre d'une minute.
- le système de suivi est un système de surveillance ou de suivi du coeur réalisant une mesure du flux neutronique au moyen d'un ensemble de détecteurs de mesure de flux neutronique disposés à l'extérieur de la cuve du réacteur et d'un ensemble de sondes de mesure de la température du fluide caloporteur à la sortie des assemblages combustibles du coeur.
- ledit système de suivi est un système de surveillance ou de suivi du coeur réalisant une mesure du flux neutronique au moyen d'un ensemble de détecteurs de mesure de flux neutronique introduits à l'intérieur de la cuve du réacteur, dans au moins une partie des assemblages combustibles dudit coeur, lesdits détecteurs comportant chacun une pluralité de sondes de mesure du flux neutronique.
- ledit code d'aide à l'exploitation est identique au code de suivi de fonctionnement du coeur.
- ledit code d'aide à l'exploitation intègre les contraintes de pilotage et de contrôle de la réactivité relatives au dit réacteur.
- ladite étape d'établissement d'une requête d'aide à l'exploitation comporte une étape de sélection d'une requête par l'opérateur parmi l'une des requêtes suivantes :
   - réalisation de transitoires prévisionnels,
   - évaluation de l'aptitude de la tranche nucléaire au suivi de réseau,
   - extrapolation linéaire des inverses des taux de comptage issus des chambres niveau source,
   - prévision de l'évolution de l'anti-réactivité et notamment dans les phases d'arrêt du réacteur,
   - suivi des concentrations de Xénon et/ou de Samarium après arrêt du réacteur,
   - réalisation de bilans de réactivité en régime sous-critique et détermination des paramètres critiques,
   - calcul du niveau de puissance maximal en cas de retour instantané en puissance,
   - optimisation de la durée de stabilisation du coeur en vue de la réalisation des essais périodiques ;
   - automatisation du dépouillement des essais périodiques à caractère neutronique,
   - calcul du bilan isotopique et du bilan matière du coeur via des calculs d'épuisement prévisionnels.
- ladite requête d'aide à l'exploitation comporte des paramètres fonctionnels dont les valeurs sont définies par l'opérateur, lesdits paramètres fonctionnels pouvant évoluer en fonction du temps.
- le procédé comporte une étape de correction périodique du modèle de coeur à la base dudit code d'aide à l'exploitation et /ou dudit code de suivi, ladite étape de correction périodique comprenant une étape de modification des paramètres intrinsèques du modèle de coeur.
- le procédé comporte une étape d'affichage des résultats de ladite étape de détermination de l'évolution du comportement du coeur sur des moyens d'affichage de ladite interface homme/machine.
- le procédé comporte une étape de récupération de l'ensemble desdites données représentatives des caractéristiques matérielles, géométriques et neutroniques du coeur, ainsi que des conditions de fonctionnement du coeur déterminées par ledit code de suivi dans des moyens de mémorisation et/ou d'archivage.
- le procédé comporte une étape de sélection par l'opérateur d'un ensemble de données représentatives, à un instant donné, des caractéristiques matérielles, géométriques et neutroniques du coeur, ainsi que des conditions de fonctionnement du coeur archivées dans lesdits moyens de mémorisation et/ou de stockage, lesdits moyens de mémorisation et/ou de stockage comportant une pluralité d'ensemble de données successives correspondant à différents instants d'archivage donnés.
- ladite étape d'archivage de l'ensemble desdites données représentatives des caractéristiques matérielles, géométriques et neutroniques du coeur, ainsi que des conditions de fonctionnement du coeur déterminées par ledit code de suivi dans lesdits moyens de mémorisation et/ou d'archivage peut être demandée à tout instant par l'opérateur.
- le procédé comporte une étape de récupération sur un réseau de l'ensemble des données représentatives des caractéristiques matérielles, géométriques et neutroniques du coeur, ainsi que des conditions de fonctionnement du coeur déterminées par ledit code de suivi, l'ensemble des données récupérées sur le réseau étant susceptibles d'être requises par l'opérateur via l'interface homme/machine et utilisé comme donnée d'entrée dans ledit code d'aide à l'exploitation .
- le procédé comporte une étape de réalisation d'au moins une fonctionnalité additionnelle à caractère non prédictif mise en oeuvre par ledit calculateur d'aide à l'exploitation.
- un ensemble de données représentatives des caractéristiques matérielles, géométriques et neutroniques du coeur, ainsi que des conditions de fonctionnement du coeur non déterminé par ledit code de suivi est utilisé en entrée dudit code d'aide à l'exploitation.

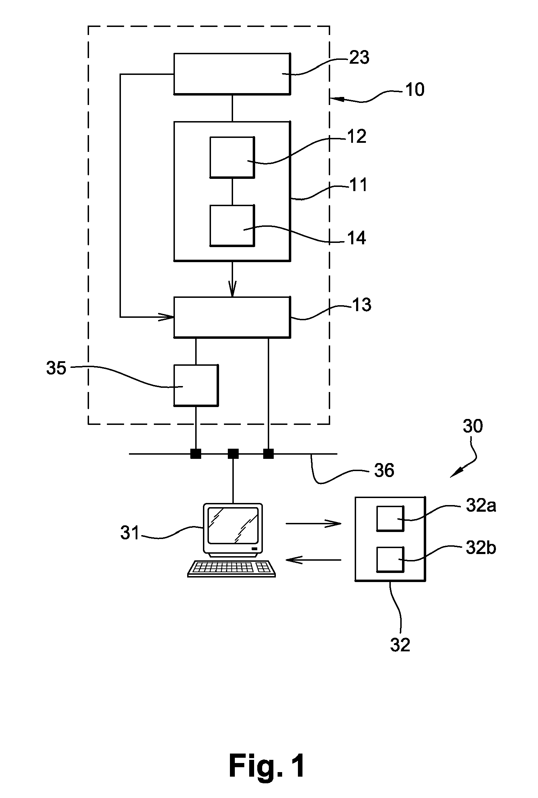

D'autres caractéristiques et avantages de l'invention ressortiront plus clairement de la description qui en est donnée ci-dessous, à titre indicatif et nullement limitatif, en référence aux figures annexées, parmi lesquelles la figure unique est une représentation schématique d'une architecture comportant des moyens pour la mise en oeuvre d'un procédé de suivi de fonctionnement du coeur en continu et des moyens pour la mise en oeuvre du procédé d'aide à l'exploitation selon l'invention.

La figure unique est une représentation schématique d'une architecture comportant un système de suivi 10 du fonctionnement du coeur, doté d'un code de calcul neutronique, couplé avec un système 30 pour la mise en oeuvre du procédé d'aide à l'exploitation selon l'invention.

Le système d'aide à l'exploitation 30 pour la mise en oeuvre du procédé d'aide à l'exploitation selon l'invention comporte :
- une interface homme/machine 31 sur laquelle un opérateur est susceptible d'établir des requêtes d'aide à l'exploitation du réacteur comme par exemple une requête de simulation, ou encore une requête de calculs prédictifs du comportement du réacteur nucléaire ;
- un calculateur d'aide à l'exploitation 32 intégrant un code de calcul neutronique 32a, avantageusement un code de calcul neutronique en trois dimensions, apte à résoudre l'équation de la diffusion,
- des moyens de récupération d'un ensemble de données 13 représentatives des caractéristiques matérielles, géométriques et neutroniques du coeur, et des conditions de fonctionnement du coeur, que l'on appellera par la suite « modèle 3D du coeur », issu du système de suivi de fonctionnement 10, situé en amont.

Le modèle 3D 13 du coeur est généré par le système de suivi du fonctionnement du coeur 10 situé en amont du système 30.

Le système de suivi 10 comporte un calculateur de suivi 11 doté d'un code de calcul 12 du flux neutronique, avantageusement en trois dimensions, permettant d'obtenir par un calcul en continu la distribution 14 instantanée en trois dimensions du flux neutronique, ou de puissance, dans le coeur en prenant en compte des valeurs courantes 23 des paramètres de fonctionnement du réacteur tels que : la puissance thermique moyenne du coeur, la température d'entrée moyenne de réfrigérant dans la cuve, la position commandée des groupes de contrôle, etc.

Le code de calcul neutronique 12, à partir des valeurs courantes 23 des paramètres de fonctionnement du réacteur, actualise le bilan isotopique du coeur au cours de l'épuisement du combustible et résout en ligne, c'est-à-dire avec une périodicité inférieure à une minute, l'équation de la diffusion pour restituer la distribution 14 en trois dimensions de la puissance courante du coeur, sous la forme d'un ensemble de valeurs de la puissance nucléaire en différents points répartis dans le coeur.

On peut par exemple citer à titre d'exemple le code de calcul neutronique SMART fondé sur une modélisation en trois dimensions de type nodal avancé. Les principes du calcul neutronique de coeur sont décrits plus en détails dans le document « Méthodes de calcul neutronique de coeur » (Techniques de l'ingénieur - B3070 - Giovanni B. Bruna et Bernard Guesdon).

Ainsi, le système de suivi 10 génère, en continu, un modèle 3D du coeur 13 correspondant à l'ensemble des données représentatives des caractéristiques matérielles, géométriques et neutroniques du coeur, et des conditions de fonctionnement du coeur, regroupant notamment les données suivantes :
- les données issues du calcul de la distribution 14 du flux neutronique ou de la puissance courante du coeur calculée par le code neutronique 12 du calculateur de surveillance 11,
- les valeurs courantes 23 des paramètres de fonctionnement du réacteur nécessaires à la mise en oeuvre du calcul de flux neutronique, telles que par exemple :
   - la description de la géométrie, de l'isotopie des matériaux et éléments présents dans le coeur,
   - les propriétés des sections efficaces des matériaux et en particulier du combustible,
   - les données caractérisant l'état du réacteur telles que le niveau de puissance produit, la température du réfrigérant, la position des grappes de commande, etc.

Le modèle 3D du coeur 13, généré périodiquement par le calculateur 11 de suivi est transmis périodiquement, vers des moyens 35 de mémorisation ou d'archivage, de façon à effectuer une sauvegarde du modèle 3D du coeur 13 à différents instants. Typiquement, le modèle 3D du coeur 13 est archivé dans la mémoire de stockage une fois par jour.

Les moyens d'archivage 35 sont éventuellement reliés à une imprimante non représentée permettant d'éditer certaines données des modèles 3D archivés à la demande de l'opérateur.

De plus, le modèle 3D du coeur 13 peut également être transmis périodiquement sur un réseau 36 de façon à être disponible à tout moment pour le système d'aide à l'exploitation 30. Le modèle 3D du coeur 13 est alors transmis sur le réseau 36 à chaque pas de calcul du code de suivi 12, c'est-à-dire par exemple, selon une périodicité inférieure à une minute.

L'opérateur peut également sélectionner, via l'interface homme/machine 31, un modèle 3D du coeur donné, archivé parmi la pluralité de modèles 3D archivés sur les moyens d'archivage 35, afin de lancer par exemple une requête d'aide à l'exploitation à partir des données d'un modèle 3D antérieur.

L'opérateur peut également demander, à tout moment, un archivage d'un modèle 3D permettant ainsi de sauvegarder le modèle 3D du coeur à un instant déterminé par l'opérateur, la demande étant réalisée de façon explicite au système via l'interface homme/machine 31 par l'établissement d'une requête d'archivage additionnel (dans ce cas, l'opérateur utilise un mode forcé). On notera que cette opération n'est possible que dans le cas où la liaison entre le calculateur de suivi et le calculateur d'aide à l'exploitation n'est pas unidirectionnelle.

Par ailleurs, l'opérateur peut optionnellement charger via l'interface homme/machine 31 des données d'un modèle 3D de coeur non généré par le code de calcul de suivi 12 du réacteur, ainsi que des données non incluses dans le modèle (par exemple, des mesures).

Le procédé selon l'invention permet la mise en oeuvre de différentes fonctionnalités du système d'aide à l'exploitation 30 sur sollicitation de l'opérateur, par l'établissement d'une requête d'aide à l'exploitation via l'interface homme/machine 31.

Grâce à l'invention, l'opérateur peut formuler une requête lui permettant notamment d'anticiper le comportement du réacteur, ou encore de vérifier une stratégie d'exploitation différente de la stratégie en cours. Ainsi, l'opérateur peut formuler, à sa guise, une requête lui permettant de réaliser l'une des fonctionnalités mises en oeuvre par le procédé selon l'invention, comme par exemple :
- réaliser des transitoires prévisionnels permettant d'anticiper l'évolution du comportement du réacteur afin de guider l'opérateur vers le choix d'une stratégie de pilotage à venir,
- évaluer l'aptitude de la tranche nucléaire à effectuer un suivi de charge donné à partir de l'état courant du coeur,
- extrapoler linéairement des inverses de taux de comptage issus des chambres niveau source,
- prédire l'évolution de l'anti-réactivité, et notamment dans les phases d'arrêt du réacteur,
- suivre les concentrations de Xénon et/ou de Samarium,
- réaliser des bilans de réactivité en régime sous-critique et déterminer les paramètres critiques afin d'aider l'opérateur à sélectionner la stratégie de redivergence, compte tenu des différents moyens de contrôle de la réactivité, et notamment le contrôle de la concentration en bore ainsi que la position des grappes de contrôle,
- calculer le niveau de puissance maximal en cas de retour instantanée en puissance en fonction du décalibrage des grappes de contrôle et de la stratégie de conduite permettant de rallier 100% de la puissance nominale en un minimum de temps,
- optimiser la durée de stabilisation du coeur en vue de réaliser des essais périodiques, via des simulations prévisionnelles,
- automatiser le dépouillement des essais périodiques à caractère neutronique à partir des mesures du système de carte de flux fournies par l'opérateur,
- calculer le bilan isotopique et le bilan matière du coeur en fonction de l'avancement dans le cycle, via des calculs d'épuisement prévisionnels.

En plus du code de calcul neutronique 32a, le calculateur 32 d'aide à l'exploitation intègre également d'autres types de données 32b telles que :
- les différentes caractéristiques et les contraintes des modes de pilotage connus de l'homme du métier (par exemple, les modes de pilotage communément nommés mode A, mode G, mode X ou mode T),
- les calculs des limites de sûreté à respecter lors des opérations de conduite normale du réacteur, ainsi que d'autres codes de calcul nécessaires permettant de fournir une aide à l'exploitation d'un réacteur nucléaire.

Lors de l'établissement d'une requête d'aide à l'exploitation, l'opérateur doit définir des données d'entrées au calculateur 32 d'aide à l'exploitation.

L'opérateur peut ainsi préciser :
- le modèle 3D du coeur à utiliser : l'opérateur a le choix entre le dernier modèle 3D archivé, dans les moyens d'archivage 35, un modèle 3D archivé dans les moyens d'archivage 35 et correspondant à un instant d'archivage antérieur ou encore le dernier modèle 3D transmis automatiquement sur le réseau 36,
- la liste des paramètres qu'il souhaite définir lors de l'évaluation du comportement du réacteur durant la requête.

Ainsi, le calculateur 32 peut recevoir trois types de données d'entrée :
- des données d'entrée paramétriques définies par l'opérateur pour la réalisation d'une fonction,
- des données d'entrée disponibles via le modèle 3D du coeur 13, c'est-à-dire typiquement la description des caractéristiques neutroniques du coeur, la position des grappes de contrôle, la température d'entrée du réfrigérant, le niveau de puissance, la concentration de Xénon et autres isotopes, relatifs au moment de sauvegarde du modèle 3D du coeur,
- et éventuellement des données d'entrée issues d'une acquisition complémentaire réalisée directement par le système d'aide à l'exploitation.

Les résultats des calculs sont ensuite affichés sur des moyens d'affichage de l'interface homme/machine 31.

L'identification d'un dysfonctionnement du système 30 est signalée à l'opérateur, via la mise en oeuvre de tests internes au système 30 d'aide à l'exploitation, au cours de son fonctionnement.

Afin de bien comprendre le fonctionnement du système d'aide à l'exploitation selon l'invention, un exemple particulier de l'établissement d'une requête de simulation par l'opérateur va être détaillé ci-après.

Dans l'exemple illustré, l'opérateur va utiliser le procédé d'aide à l'exploitation selon l'invention afin de simuler un transitoire de suivi de charge à partir de l'état actuel du réacteur, qui est par exemple à 100% de la puissance nominale. Le transitoire de suivi de charge à simuler évolue selon la configuration suivante :
- un premier palier de puissance à 100% de la puissance nominale d'une durée de deux heures,
- un deuxième palier de puissance à 50% de la puissance nominale d'une durée de huit heures, et
- un retour à 100% de la puissance nominale,
les transitions de puissance entre les paliers devant être réalisés le plus rapidement possible (i.e. à vitesse maximale).

L'opérateur, via l'interface homme/machine 31, établit une requête de simulation afin de simuler le comportement du réacteur face à un transitoire de suivi de charge prévisionnel, tel que décrit ci-dessus, en sélectionnant la fonctionnalité prévisionnelle correspondante.

Lors de l'établissement de la requête, l'opérateur va préciser en données d'entrée la stratégie de transitoire à effectuer en fonction du temps ainsi que « l'état » du coeur à partir duquel il souhaite débuter la simulation.

Dans notre exemple, l'opérateur souhaite effectuer une simulation à partir des données 13 du modèle 3D du coeur en cours. Pour ce faire, les données du modèle 3D les plus récentes disponibles sont donc récupérées sur le réseau 36 et transmises au calculateur d'aide à l'exploitation 32.

Toutefois, si l'opérateur avait choisi d'effectuer la simulation à partir d'un état antérieur du coeur, par exemple avec un modèle 3D du coeur de la journée précédente, il aurait réalisé une recherche sur les moyens d'archivage 35 d'un modèle 3D du coeur de l'instant désiré et réalisé une copie locale en vue de transmettre les données du modèle 3D au calculateur d'aide à l'exploitation 32.

Lors de l'établissement de la requête, dans le cadre de l'exemple ici considéré, l'opérateur choisit également les paramètres de contrôle de la puissance via les mouvements programmés des grappes de contrôle, et l'évolution souhaitée du déséquilibre axial de puissance.

L'opérateur lance ensuite la simulation ; les paramètres définis par l'opérateur étant transmis au calculateur 32 d'aide à l'exploitation de sorte que le code de calcul neutronique 32a puisse calculer l'évolution requise, via une résolution à chaque pas de temps du transitoire de l'équation de la diffusion.

Les résultats du calcul sont ensuite rendus disponibles à l'opérateur via les moyens d'affichage de l'interface homme/machine 31 pour chaque instant de transitoire simulé. En particulier, le calculateur 32 détermine :
- l'évolution de la concentration en bore requise pour la réalisation du transitoire dans les conditions d'évolutions de la puissance et du déséquilibre axial de puissance souhaitées,
- les volumes d'eau et/ou de bore qu'il doit injecter dans le coeur afin de pouvoir obtenir le transitoire de fonctionnement souhaité,
- les marges de fonctionnement prévisionnelles dans le cas du transitoire retenu.

De cette manière, l'opérateur dispose d'un moyen pour juger si le transitoire souhaité peut se dérouler en respectant les limites de sûreté du réacteur. Dans ce cas précis simulé, l'opérateur peut tenir compte des résultats de la simulation pour la réalisation des opérations de borication et de dilution, et ainsi anticiper sa stratégie de pilotage.

Dans le cas d'un résultat ne répondant pas à ses attentes en matière de sûreté, l'opérateur peut faire varier des paramètres de conduite de la tranche préalablement définis, par exemple en réduisant la vitesse de transition de la puissance, et relancer une simulation afin d'optimiser le déroulement de son transitoire de suivi de charge, tout en étant conforté sur le niveau des marges de fonctionnement disponibles tout au long du transitoire de suivi de charge.

Durant le temps nécessaire à la réalisation de la simulation et des calculs du système d'aide à l'exploitation 30, le fonctionnement du système de suivi 10 en amont n'est à aucun instant perturbé, interrompu, ni altéré.

Un des avantages du procédé selon l'invention est la représentativité du modèle 3D de coeur étant utilisé en tant que donnée d'entrée des calculs du système d'aide à l'exploitation, ledit modèle intégrant en effet les conditions de fonctionnement réelles du réacteur.

Ainsi les données du modèle 3D et des calculs de simulation tiennent compte de l'historique de fonctionnement du réacteur, y compris les effets court terme, tels que par exemple, la distribution de Xénon actualisée.

Ainsi, à partir d'un modèle 3D du coeur, le procédé d'aide à l'exploitation selon l'invention, permet par exemple d'anticiper le comportement du réacteur sur la base d'un profil d'évolution de paramètres fixé par l'opérateur.

Le lancement d'une simulation de pilotage, ou tout autre demande de la part de l'opérateur, est réalisé indépendamment du fonctionnement du système de suivi en amont ; le calculateur d'aide à l'exploitation 32 spécifique comportant ses propres codes de calcul, permettant ainsi de ne pas perturber le fonctionnement du code de suivi 12. De plus, dans le cas d'une liaison unidirectionnelle entre le calculateur 32 d'aide à l'exploitation et le calculateur 11 de suivi, aucune transmission de données du calculateur 32 d'aide à l'exploitation vers le calculateur 11 de suivi n'est possible ce qui permet d'éviter des interactions entre les deux calculateurs ou encore de fausses manipulations de la part de l'opérateur.

## Revendications

1. Procédé d'aide à l'exploitation d'un réacteur nucléaire comportant les étapes consistant à :
- établir une requête d'aide à l'exploitation dudit réacteur au moyen d'une interface homme/machine (31) interagissant avec un calculateur (32) d'aide à l'exploitation dédié à ladite aide à l'exploitation et utilisant un code de calcul neutronique en trois dimensions (32a) résolvant l'équation de la diffusion, dit code d'aide à l'exploitation;
- transmettre à partir d'un système de suivi (10) du fonctionnement du coeur du réacteur vers ledit calculateur (32) d'aide à l'exploitation et de façon unidirectionnelle, un ensemble de données (13) représentatives des caractéristiques matérielles, géométriques et neutroniques du coeur, ainsi que des conditions de fonctionnement du coeur, lesdites données (13) étant déterminées par un code neutronique en trois dimensions (12) actualisant le bilan isotopique du coeur au cours de l'épuisement du combustible et résolvant périodiquement en ligne l'équation de la diffusion, dit code de suivi, ledit code de suivi (12) étant intégré dans un deuxième calculateur distinct, dit calculateur de suivi, dédié au dit système de suivi (10) ;
- déterminer une évolution du comportement du coeur du réacteur en utilisant ledit code (32a) d'aide à l'exploitation, lesdites données (13) représentatives des caractéristiques matérielles, géométriques et neutroniques du coeur, ainsi que des conditions de fonctionnement du coeur et ladite requête d'aide à l'exploitation étant utilisées en tant que données d'entrée dudit code (32a) d'aide à l'exploitation.

2. Procédé d'aide à l'exploitation d'un réacteur nucléaire selon la revendication précédente **caractérisé en ce que** ledit code de suivi (12) fonctionne de façon continue, typiquement avec une périodicité de l'ordre d'une minute.

3. Procédé d'aide à l'exploitation d'un réacteur nucléaire selon l'une des revendications précédentes **caractérisé en ce que** le système de suivi est un système de surveillance ou de suivi du coeur réalisant une mesure du flux neutronique au moyen d'un ensemble de détecteurs de mesure de flux neutronique disposés à l'extérieur de la cuve du réacteur et d'un ensemble de sondes de mesure de la température du fluide caloporteur à la sortie des assemblages combustibles du coeur.

4. Procédé d'aide à l'exploitation d'un réacteur nucléaire selon l'une des revendications 1 à 2 **caractérisé en ce que** ledit système de suivi est un système de surveillance ou de suivi du coeur réalisant une mesure du flux neutronique au moyen d'un ensemble de détecteurs de mesure de flux neutronique introduits à l'intérieur de la cuve du réacteur, dans au moins une partie des assemblages combustibles dudit coeur, lesdits détecteurs comportant chacun une pluralité de sondes de mesure du flux neutronique.

5. Procédé d'aide à l'exploitation d'un réacteur nucléaire selon l'une des revendications précédentes **caractérisé en ce que** ledit code d'aide à l'exploitation (32a) est identique au code de suivi (12) de fonctionnement du coeur.

6. Procédé d'aide à l'exploitation d'un réacteur nucléaire selon l'une des revendications précédentes **caractérisé en ce que** ledit code d'aide à l'exploitation (32a) intègre les contraintes de pilotage et de contrôle de la réactivité relatives au dit réacteur.

7. Procédé d'aide à l'exploitation d'un réacteur nucléaire selon l'une des revendications précédentes **caractérisé en ce que** ladite étape d'établissement d'une requête d'aide à l'exploitation comporte une étape de sélection d'une requête par l'opérateur parmi l'une des requêtes suivantes :
- réalisation de transitoires prévisionnels,
- évaluation de l'aptitude de la tranche nucléaire au suivi de réseau,
- extrapolation linéaire des inverses des taux de comptage issus des chambres niveau source,
- prévision de l'évolution de l'anti-réactivité et notamment dans les phases d'arrêt du réacteur,
- suivi des concentrations de Xénon et/ou de Samarium après arrêt du réacteur,
- réalisation de bilans de réactivité en régime sous-critique et détermination des paramètres critiques,
- calcul du niveau de puissance maximal en cas de retour instantané en puissance,
- optimisation de la durée de stabilisation du coeur en vue de la réalisation des essais périodiques ;
- automatisation du dépouillement des essais périodiques à caractère neutronique,
- calcul du bilan isotopique et du bilan matière du coeur via des calculs d'épuisement prévisionnels.

8. Procédé d'aide à l'exploitation d'un réacteur nucléaire selon l'une des revendications précédentes **caractérisé en ce que** ladite requête d'aide à l'exploitation comporte des paramètres fonctionnels dont les valeurs sont définies par l'opérateur, lesdits paramètres fonctionnels pouvant évoluer en fonction du temps.

9. Procédé d'aide à l'exploitation d'un réacteur nucléaire selon l'une des revendications précédentes **caractérisé en ce qu'**il comporte une étape de correction périodique du modèle de coeur à la base dudit code d'aide à l'exploitation (32a) et /ou dudit code de suivi (11), ladite étape de correction périodique comprenant une étape de modification des paramètres intrinsèques du modèle de coeur.

10. Procédé d'aide à l'exploitation d'un réacteur nucléaire selon l'une des revendications précédentes **caractérisé en ce qu'**il comporte une étape d'affichage des résultats de ladite étape de détermination de l'évolution du comportement du coeur sur des moyens d'affichage de ladite interface homme/machine (31).

11. Procédé d'aide à l'exploitation d'un réacteur nucléaire selon l'une des revendications précédentes **caractérisé en ce qu'**il comporte une étape de récupération de l'ensemble desdites données (13) représentatives des caractéristiques matérielles, géométriques et neutroniques du coeur, ainsi que des conditions de fonctionnement du coeur déterminées par ledit code de suivi (10) dans des moyens (35) de mémorisation et/ou d'archivage.

12. Procédé d'aide à l'exploitation d'un réacteur nucléaire selon la revendication 11 **caractérisé en ce qu'**il comporte une étape de sélection par l'opérateur d'un ensemble de données (13) représentatives, à un instant donné, des caractéristiques matérielles, géométriques et neutroniques du coeur, ainsi que des conditions de fonctionnement du coeur archivées dans lesdits moyens (35) de mémorisation et/ou de stockage, lesdits moyens (35) de mémorisation et/ou de stockage comportant une pluralité d'ensemble de données successives correspondant à différents instants d'archivage donnés.

13. Procédé d'aide à l'exploitation d'un réacteur nucléaire selon la revendication 11 ou la revendication 12 **caractérisé en ce que** ladite étape d'archivage de l'ensemble desdites données (13) représentatives des caractéristiques matérielles, géométriques et neutroniques du coeur, ainsi que des conditions de fonctionnement du coeur déterminées par ledit code de suivi (10) dans lesdits moyens (35) de mémorisation et/ou d'archivage peut être demandée à tout instant par l'opérateur.

14. Procédé d'aide à l'exploitation d'un réacteur nucléaire selon l'une des revendications précédentes **caractérisé en ce qu'**il comporte une étape de récupération sur un réseau de l'ensemble des données (13) représentatives des caractéristiques matérielles, géométriques et neutroniques du coeur, ainsi que des conditions de fonctionnement du coeur déterminées par ledit code de suivi (12), l'ensemble des données (13) récupérées sur le réseau étant susceptibles d'être requises par l'opérateur via l'interface homme/machine (31) et utilisé comme donnée d'entrée dans ledit code d'aide à l'exploitation (32a).

15. Procédé d'aide à l'exploitation d'un réacteur nucléaire selon l'une des revendications précédentes **caractérisé en ce qu'**il comporte une étape de réalisation d'au moins une fonctionnalité additionnelle à caractère non prédictif mise en oeuvre par ledit calculateur d'aide à l'exploitation.

16. Procédé d'aide à l'exploitation d'un réacteur nucléaire selon l'une des revendications précédentes **caractérisé en ce qu'**un ensemble de données représentatives des caractéristiques matérielles, géométriques et neutroniques du coeur, ainsi que des conditions de fonctionnement du coeur non déterminé par ledit code de suivi (12) est utilisé en entrée dudit code (32a) d'aide à l'exploitation.

## Patentansprüche

1. Verfahren zur Unterstützung des Betriebs eines Kernreaktors, das die folgenden Schritte aufweist:
- Erstellen einer Betriebsunterstützungsanforderung des Reaktors mittels einer Mensch-Maschinen-Schnittstelle (31), die mit einem speziellen Betriebsunterstützungsrechner (32) für die Betriebsunterstützung interagiert und einen die Diffusionsgleichung lösenden, als Betriebsunterstützungscode bezeichneten dreidimensionalen Neutronenberechnungscode (32a) verwendet,
- Übermitteln ab einem Überwachungssystem (10) der Funktion des Reaktorkerns an den Betriebsunterstützungsrechner (32) und eindirektional eine Gruppe repräsentativer Daten (13) der materiellen, geometrischen und Neutronen-Merkmale des Kerns sowie der Funktionsbedingungen des Kerns, wobei diese Daten (13) von einem dreidimensionalen, als Überwachungscode bezeichneten Neutronencode (12) bestimmt werden, der die Isotopenbilanz des Kerns während der Abreicherung des Brennstoffs aktualisiert und periodisch online die Diffusionsgleichung löst, wobei der Überwachungscode (12) in einen zweiten unterschiedlichen, als Überwachungsrechner bezeichneten Rechner, der für das Überwachungssystem (10) bestimmt ist, integriert ist,
- Bestimmen einer Entwicklung des Verhaltens des Reaktorkerns bei Verwendung des Betriebsunterstützungscodes (32a), wobei die repräsentativen Daten der materiellen, geometrischen und Neutronen-Merkmale des Kerns sowie der Funktionsbedingungen des Kerns und die Betriebsunterstützungsanforderung als Eingangsdaten des Betriebsunterstützungscodes (32a) verwendet werden.

2. Verfahren zur Unterstützung des Betriebs eines Kernreaktors nach vorangehendem Anspruch, **dadurch gekennzeichnet, dass** der Überwachungscode (12) kontinuierlich funktioniert, in typischer Weise in einem Intervall von zirka einer Minute.

3. Verfahren zur Unterstützung des Betriebs eines Kernreaktors nach eine der vorangehenden Ansprüche, **dadurch gekennzeichnet, dass** das Überwachungssystem ein Kontroll- oder Überwachungssystem des Kerns ist, das eine Messung des Neutronenstroms mittels einer Gruppe von Neutronenstrommesssensoren, die außerhalb des Reaktorbehälters angeordnet sind, und einer Gruppe von Messsensoren der Temperatur der Kühlflüssigkeit am Ausgang der Brennelementbündel des Kerns durchführt.

4. Verfahren zur Unterstützung des Betriebs eines Kernreaktors nach einem der Ansprüche 1 bis 2, **dadurch gekennzeichnet, dass** das Überwachungssystem ein Kontroll- oder Überwachungssystem des Kerns ist, das eine Messung des Neutronenstroms mittels einer Gruppe von Neutronenstrommesssensoren, die im Reaktorbehälter in mindestens einem Teil der Brennelementbündel des Kerns angeordnet sind, wobei die Sensoren jeweils eine Vielzahl von Neutronenstrommesssonden aufweisen.

5. Verfahren zur Unterstützung des Betriebs eines Kernreaktors nach einem der vorangehenden Ansprüche, **dadurch gekennzeichnet, dass** der Betriebsunterstützungscode (32a) mit dem Überwachungscode (12) der Funktion des Kerns identisch ist.

6. Verfahren zur Unterstützung des Betriebs eines Kernreaktors nach einem der vorangehenden Ansprüche, **dadurch gekennzeichnet, dass** der Betriebsunterstützungscode (32a) Lenk- und Kontrollanforderungen der Reaktivität in Bezug auf den Reaktor integriert.

7. Verfahren zur Unterstützung des Betriebs eines Kernreaktors nach einem der vorangehenden Ansprüche, **dadurch gekennzeichnet, dass** der Schritt des Erstellens einer Betriebsunterstützungsanforderung einen Auswahlschritt einer Anforderung durch den Bediener von einer der folgenden Anforderungen aufweist:
- Durchführung kalkulatorischer Spikes,
- Evaluierung der Netzüberwachungsbefähigung der Kerneinheit,
- lineare Extrapolierung des Zählratenkehrwerts aus dem Quellraumniveau,
- Prognose der Entwicklung der Anti-Reaktivität und insbesondere während der Stoppphasen des Reaktors,
- Überwachung der Xenon- und/oder Samariumkonzentrationen nach dem Reaktorstopp,
- Anfertigung von Reaktivitätsbilanzen im subkritischen Betrieb und Bestimmung der kritischen Parameter,
- Berechnung des maximalen Leistungsniveaus im Fall einer kurzfristigen Leistungsrückkehr,
- Optimierung der Stabilisierungsdauer des Kerns zwecks Durchführung periodischer Tests,
- Automatisierung der Auswertung der periodischen Tests mit Neutronencharakter,
- Berechnung der Isotopenbilanz und der Materialbilanz des Kerns anhand prognostischer Abreicherungsberechnungen.

8. Verfahren zur Unterstützung des Betriebs eines Kernreaktors nach einem der vorangehenden Ansprüche, **dadurch gekennzeichnet, dass** die Betriebsunterstützungsanforderung Funktionsparameter aufweist, deren Werte vom Bediener bestimmt werden, wobei sich die Funktionsparameter im Laufe der Zeit ändern können.

9. Verfahren zur Unterstützung des Betriebs eines Kernreaktors nach einem der vorangehenden Ansprüche, **dadurch gekennzeichnet, dass** es einen periodischen Korrekturschritt des Kernmodells auf der Basis des Betriebsunterstützungscodes (32a) und/oder des Überwachungscodes (11) aufweist, wobei der periodische Korrekturschritt einen Änderungsschritt der inhärenten Parameter des Kernmodells umfasst.

10. Verfahren zur Unterstützung des Betriebs eines Kernreaktors nach einem der vorangehenden Ansprüche, **dadurch gekennzeichnet, dass** es einen Anzeigeschritt der Ergebnisse des Bestimmungsschritts der Entwicklung des Verhaltens des Kerns auf Anzeigemitteln der Mensch-Maschinen-Schnittstelle (31) aufweist.

11. Verfahren zur Unterstützung des Betriebs eines Kernreaktors nach einem der vorangehenden Ansprüche, **dadurch gekennzeichnet, dass** es einen Wiederbeschaffungsschritt aller repräsentativen Daten (13) der materiellen, geometrischen und Neutronen-Merkmale des Kerns sowie der Funktionsbedingungen des Kerns, die von dem Überwachungscode (10) in den Speicher- und/oder Archivierungsmitteln (35) festgelegt sind, aufweist.

12. Verfahren zur Unterstützung des Betriebs eines Kernreaktors nach Anspruch 11, **dadurch gekennzeichnet, dass** es einen Auswahlschritt durch den Bediener einer Gruppe repräsentativer Daten (13) zu einem bestimmten Moment der materiellen, geometrischen und Neutronen-Merkmale des Kerns sowie der Funktionsbedingungen des Kerns, die in den Speicher- und/oder Archivierungsmitteln (35) archiviert sind, aufweist, wobei die Speicher- und/oder Archivierungsmittel (35) eine Vielzahl Gruppen aufeinanderfolgender Daten aufweisen, die bestimmten unterschiedlichen Archivierungsmomenten entsprechen.

13. Verfahren zur Unterstützung des Betriebs eines Kernreaktors nach Anspruch 11 oder Anspruch 12, **dadurch gekennzeichnet, dass** der Archivierungsschritt aller repräsentativen Daten (13) der materiellen, geometrischen und Neutronen-Merkmale des Kerns sowie der Funktionsbedingungen des Kerns, die von dem Überwachungscode (10) in den Speicher- und/oder Archivierungsmitteln (35) festgelegt sind, jederzeit vom Bediener abrufbar sind.

14. Verfahren zur Unterstützung des Betriebs eines Kernreaktors nach einem der vorangehenden Ansprüche, **dadurch gekennzeichnet, dass** es einen Wiederbeschaffungsschritt aus einem Netzwerk aller für die materiellen, geometrischen und Neutronen-Merkmale des Kerns sowie die von dem Überwachungscode (12) festgelegten Funktionsbedingungen des Kerns repräsentativen Daten aufweist, wobei die Gruppe der aus dem Netzwerk wiederbeschafften Daten (13) vom Bediener über die Mensch-Maschinen-Schnittstelle (31) abrufbar und als Eingangsangabe in den Betriebsunterstützungscode (32a) verwendbar sind.

15. Verfahren zur Unterstützung des Betriebs eines Kernreaktors nach einem der vorangehenden Ansprüche, **dadurch gekennzeichnet, dass** es einen Durchführungsschritt mindestens einer zusätzliche Funktion mit nicht prognostischem Charakter aufweist, die von dem Betriebsunterstützungsrechner umgesetzt wird.

16. Verfahren zur Unterstützung des Betriebs eines Kernreaktors nach einem der vorangehenden Ansprüche, **dadurch gekennzeichnet, dass** eine Gruppe repräsentativer Daten der materiellen, geometrischen und Neutronen-Merkmale des Kerns sowie der Funktionsbedingungen des Kerns, die nicht vom Überwachungscode (12) bestimmt sind, als Eingabe in den Betriebsunterstützungscode (32a) verwendet wird.

## Claims

1. A method for the operating assistance of a nuclear reactor including the steps of:
- setting a request for the operating assistance of said reactor by means of a man/machine interface (31) interacting with an operating assistance calculator (32) dedicated to said operating assistance and using a three-dimensional neutron calculator code (32a) solving the diffusion equation, referred to as an operating assistance code,
- transmitting from a system (10) for monitoring the operation of the reactor core to said operating assistance calculator (32) and in a unidirectional way, a set of data (13) representative of the material, geometric and neutron characteristics of the core, as well as the operation conditions of the core, said data (13) being determined by a three-dimensional neutron code (12) updating the isotope balance of the core during the fuel burnup and periodically solving on line the diffusion equation, referred to as a the monitoring code, said monitoring code (12) being integrated in a second distinct calculator, referred to as a monitoring calculator, dedicated to said monitoring system (10);
- determining a change over time of the behaviour of the reactor core by using said operating assistance code (32a), said data (13) representative of the material, geometric and neutron characteristics of the core, as well as the operation conditions of the core, and said request for the operating assistance being used as input data of said operating assistance code (32a).

2. The method for the operating assistance of a nuclear reactor according to the preceding claim, **characterised in that** the monitoring code (12) continuously operates, typically with a periodicity in the order of one minute.

3. The method for the operating assistance of a nuclear reactor according to one of the preceding claims, **characterised in that** the monitoring system is a core monitoring or surveillance system making a measurement of the neutron flux by means of a set of detectors for measuring the neutron flux which are provided outside the reactor vessel and a set of probes for measuring the temperature of the heat transfer fluid at the outlet of the fuel assemblies of the core.

4. The method for the operating assistance of a nuclear reactor according to one of claims 1 to 2, **characterised in that** the monitoring system is a core monitoring or surveillance system making a measurement of the neutron flux by means of a set of detectors for measuring the neutron flux which are introduced inside the reactor vessel, in at least one part of the fuel assemblies of said core, said detectors each including a plurality of probes for measuring the neutron flux.

5. The method for the operating assistance of a nuclear reactor according to one of the preceding claims, **characterised in that** said operating assistance code (32a) is identical to the monitoring code (12) for monitoring the operation of the core.

6. The method for the operating assistance of a nuclear reactor according to one of the preceding claims, **characterised in that** said operating assistance code (32a) takes into account the operational and control reactivity constraints of said reactor.

7. The method for the operating assistance of a nuclear reactor according to one of the preceding claims, **characterised in that** said step of setting a request for the operating assistance includes a step of selecting a request by the operator from one of the following requests:
- making estimated transients,
- evaluating the capability of the nuclear unit to load follow,
- linearly extrapolating the inverses of the counting rates from the source level chambers,
- estimating the change over time of the negative reactivity and in particular in the reactor shutdown phases,
- monitoring the Xenon and/or Samarium concentrations after shutting down the reactor,
- making reactivity balances in sub-critical flow and determining the critical parameters,
- calculating the maximum power level in case of instantaneous return of power,
- optimizing the core stabilization duration for making periodical tests;
- automating the processing of the periodical tests having a neutron character,
- calculating the isotope balance and the material balance of the core via estimated depletion calculations.

8. The method for the operating assistance of a nuclear reactor according to one of the preceding claims, **characterised in that** said request for the operating assistance includes functional parameters the values of which are defined by the operator, wherein said functional parameters can change over time.

9. The method for the operating assistance of a nuclear reactor according to one of the preceding claims, **characterised in that** it includes a step of periodically correcting the core model underlying said operating assistance code (32a) and/or said monitoring code (11), said periodical correction step comprising a step of modifying the intrinsic parameters of the core model.

10. The method for the operating assistance of a nuclear reactor according to one of the preceding claims, **characterised in that** it includes a step of displaying the results of said step of determining the change over time of the behaviour of the core on display means of said man/machine interface (31).

11. The method for the operating assistance of a nuclear reactor according to one of the preceding claims, **characterised in that** it includes a step of store the set of said data (13) representative of the material, geometric and neutron characteristics of the core, as well as the operation conditions of the core which are determined by said monitoring code (10) in storage and/or archive means (35).

12. The method for the operating assistance of a nuclear reactor according to claim 11, **characterised in that** it includes a step of selecting by the operator a set of data (13) representative, at a given instant, of the material, geometric and neutron characteristics of the core, as well as the operation conditions of the core archived in said storage and/or archive means (35), said storage and/or archive means (35) including a plurality of set of successive data corresponding to different given archived instants.

13. The method for the operating assistance of a nuclear reactor according to claim 11 or claim 12, **characterised in that** said step of storing the set of data representative of the material, geometric and neutron characteristics of the core, as well as the operation conditions of the core which are determined by said monitoring code (10) in said storage and/or archive means (35) can be requested by the operator all the time.

14. The method for the operating assistance of a nuclear reactor according to one of the preceding claims, **characterised in that** it includes a step of recovering on a network the set of data (13) representative of the material, geometric and neutron characteristics of the core, as well as the operation conditions of the core which are determined by said monitoring code (12), the set of data (13) recovered on the network being likely to be required by the operator via the man/machine interface (31) and used as an input data in said operating assistance code (32a).

15. The method for the operating assistance of a nuclear reactor according to one of the preceding claims, **characterised in that** it includes a step of performing at least one additional functionality having a non-predictive character implemented by said operating assistance calculator.

16. The method for the operating assistance of a nuclear reactor according to one of the preceding claims, **characterised in that** the set of data representative of the material, geometric and neutron characteristics of the core, as well as the operation conditions of the core not determined by said monitoring code (12) is used as an input of said operating assistance code (32a).
